# EUROPEAN PATENT SPECIFICATION

(11) **EP 0 725 697 B1**
(45) Date of publication and mention of the grant of the patent: **03.09.1997**
(21) Application number: 94932148.3
(22) Date of filing: 02.11.1994
(51) Int. Cl.: B22D 19/02

(54) **SELECTIVELY REINFORCED Al-BASE ALLOY DISC BRAKE CALIPERS**
TEILWEISE VERSTÄRKTER SCHEIBENBREMSSATTEL AUF ALUMINIUMBASIS
ETRIER DE FREIN A DISQUE EN ALLIAGE D'ALUMINIUM A RENFORTS SELECTIFS

(30) Priority: 02.11.1993 US 146258
(43) Date of publication of application: 14.08.1996
(73) Proprietor: AlliedSignal Inc., Morristown, New Jersey 07962-2245 (US)
(72) Inventor: ZEDALIS, Michael, Sean, Randolph, NJ 07869 (US); CHIPKO, Paul, Andrew, Blairstown, NJ 07825 (US)
(74) Representative: Hucker, Charlotte Jane
(86) International application number: US9412611
(87) International publication number: WO9512468

(56) References cited:
- EP-A- 0 223 478
- GB-A- 2 079 653
- GB-A- 2 087 490
- GB-A- 2 127 117
- US-A- 3 547 180
- US-A- 5 168 964
- DATABASE WPI Week 7421, Derwent Publications Ltd., London, GB; AN 74-39644 21! & SU,A,393 036 (KHARKOV LENIN POLY) 27 December 1973
- DATABASE WPI Week 7836, Derwent Publications Ltd., London, GB; AN 78-64395A 36! & JP,A,53 088 628 (KOGA SEIMITSU CHUZO) 4 August 1978
- PATENT ABSTRACTS OF JAPAN vol. 10, no. 265 (M-515) (2321) 10 September 1986 & JP,A,61 088 956 (HITACHI METALS LTD) 7 May 1986
- DATABASE WPI Week 8231, Derwent Publications Ltd., London, GB; AN 82-64490 31! & JP,A,57 101 643 (KUBOTA KK) 24 June 1982
- DATABASE WPI Week 8706, Derwent Publications Ltd., London, GB; AN 87-039121 06! & JP,A,61 293 650 (AKEBONO BRAKE CHUO) 24 December 1986

## Description

The present invention relates to lightweight Al-base alloy disc brake calipers, and more particularly to a method for selectively reinforcing Al-base alloy disc brake calipers to enhance braking performance by increasing flexural strength and stiffness.

### Description of the Prior Art

To further increase fuel efficiency and reduce engine emissions, the weight of future automobiles will need to be reduced. Weight reduction is being achieved through the down-sizing a well a by implementing lighter-weight materials. While weight reduction is a primary requirement certain applications mandate that candidate replacement materials also exhibit, in combination, high strength, stiffness, ductility, toughness, and corrosion resistance a well as the ability to be manufactured in a technically and economically viable manner.

To date, polymers represent a very large portion of lightweight replacement materials being utilized for automotive components. Because of deficient mechanical properties, however, most of these components are being utilized in non-structural applications. The usage of aluminum (Al) has also steadfastly increased in automobiles over the last decade. Toddy, Al-base alloys are being utilized in body panels, engine and power train components as well as various brake components.

In the area of brake components, Al-base alloys have been utilized for example, in master cylinders, brake pistons as well as in disc brake calipers. At present, their use in structural brake components has been largely limited by lower strength and stiffness. For example, it has been found that if a brake component that is currently made of steel or cast iron is manufactured in aluminum, the component exhibits between one-half and one-third the stiffness. In service, lower stiffness translates into higher strain (i.e., elongation or deflection) for a given applied stress. This difference can be as much as two to three times as much as for a cast iron or steel component.

Disc brakes are common on most automobiles and are comprised of a disc brake caliper which straddles the rim of a disc (i.e., a rotor) which co-rotates with the wheel. Brake pads are placed between the caliper and the disc, on either side of the disc, to provide the necessary braking power when the braking system is actuated. Hydraulic brake cylinders may be present on one or both sides of the caliper. These are located in the leg sections of the caliper. A bridge section, often having the curvature of the disc or rotor, connects the legs of the caliper. During braking, a brake piston located within the cylinder(s) is forced out and in contact with the disc to be pinched between brake pads. This action causes the rotational speed of the disc to be slowed or stopped.

The use of aluminium for disc brake calipers has received considerable attention for more than the past decade. For the case of a disc brake caliper, equivalent stiffness may be achieved in a Al-base alloy by increasing the cross-sectional area of the caliper in comparison to the dimensions presently fabricated in cast iron. Increasing the dimensions of the component understandably mitigates the weight savings advantage of substituting Al. Increasing the cross-sectional area also has additional dimensional limitations depending on the envelop size in which the component may have to fit.

Numerous attempts have been made in the past to utilize aluminum for a disc brake caliper to benefit from it's lower density. Girlock Limited has led brake manufactures in in Al usage. Caplygin, in USP 4,261,444, teaches an aluminum alloy disc brake assembly that is constructed within a specific combination of housing, pad and piston dimensions. Rigidity problems are overcome by circumferentially lengthening the profile of the housing as well as by increasing the thickness of the bridge and outer leg. By reducing the height of the housing, the center of effort of the piston is raised with respect to the axis of rotation of the disc and the disc pad ratio is reduced. As a result of this design modification (i.e., increasing the circumferential length of the caliper), the thickness of the housing has been reduced by up to 30% in comparison to a caliper fabricated in Al to provide equivalent stiffness and does not include any design modifications. While the Girlock "Slimline" caliper provides a weight advantage, the lower strength and stiffness of Al in comparison to cat iron, have still required that the cross-sectional area in the bridge section of the caliper be increased significantly in comparison to the cross-sectional area of a nodular cast iron caliper exhibiting the same flexural stiffness. To compensate for deficiencies in strength and stiffness, these design modifications have increased the circumferential length of the caliper ad the overall "package size" of the caliper. As a result of "slimlining" the caliper is limited to use on vehicles which can accommodate its larger package size (i.e., vehicles which have larger diameter wheels).

Melinat in USP 4, 342,380 describes a caliper for a disc brake which has a steel sheet bridge section ad a cast aluminum piston chamber. Here, one side of the disc brake caliper is formed by a sheet steel portion to form a bridge for the caliper and the other side formed by a cast aluminum portion to define a piston chamber for the caliper. The piston housing is preferably cast using a suitable aluminium alloy and is cast directly onto the bridge legs so as to enclose the outer end portion of those legs and particularly so that it grip the irregular surfaces for casting security. No mention is made to the casting conditions or the character of the interface between the cast aluminum piston and the solid steel bridge section. The caliper construction, using steel and aluminum, is claimed to yield a weight reduction of about 20% to 30% over similar sized nodular cast iron calipers.

Similarly, British Patent 2,087,490 to Moore et al. describes a cast aluminum disc brake caliper body which has a ferrous plate cast-in across a limb-interconnecting bridge to provide reinforcement. Here, one limb of the ferrous plate is fixed to a reaction member (e.g., a stub axle) to support flexural displacement during braking.

German Patent 3,322,232 to Corey et al. discloses a combined disc brake saddle which has a cast iron saddle joined to a steel brake cylinder by an aluminium casting. The cylinder is rigidly held in the casting by establishing a pre-stress on the cylinder external diameter during casting.

European Patent 292,360 to Fargier et al. discloses the use of a mechanically attached (i.e., riveted) steel cover plate to a lightweight caliper, (e.g., an aluminum alloy) to prevent fretting wear and damage to the caliper material.

German Patent 4,202,394 to Mehner et al. describes a floating disc brake caliper which is reinforced by a number of steel bolts placed through the bridge section of the caliper.

United States Patent 5,168,964 to Schimmell discloses a lightweight aluminum caliper wherein the cylinder bore is provided a a prefabricated cylinder liner. The use of such a liner eliminates the need for machining, and thus, allows the outer leg of the caliper to be designed without an access opening. Eliminating the access opening in the caliper enhances the stiffness of the Al-base alloy caliper. No specific design data is presented, nor the conditions used for casting the aluminum alloy around the steel cylinder.

As indicated by the teachings of the aforementioned patents, the use of aluminum in disc brake calipers requires significant design modifications. Moreover, none of the teachings provide for the maximum use of aluminum in disc brake calipers while maintaining comparable braking performance and package size to that of cast iron calipers. The need therefore remains in the art for a lightweight Al-base disc brake caliper which can utilize existing designs and design concepts, exhibit comparable braking performance to that of cast iron (i.e., comparable strength and stiffness) while providing a maximum reduction in weight, and can be utilized on all vehicles, irrespective of package size constraints.

### Summary of the Invention

The present invention provides a process wherein a selectively reinforced lightweight Al-base disc brake caliper is produced which exhibits comparable strength and stiffness to that of cast iron calipers. The resultant caliper is suitable for all vehicle platforms and does not require extensive caliper redesign and re-packaging. In practice of the present invention, selectively reinforced lightweight Al-base alloy brake calipers suitable for all classes of vehicles are fabricated by incorporating a high strength and stiffness insert into the bridge section of the caliper. The process, as described herein, is highly efficient and economical, and avoids the need for time consuming and costly re-design modifications. Preferable insert materials and insert pre-treatment conditions, a well as casting conditions which may be employed to provide a high strength metallargical bond with a overcast Al alloy are described hereinafter. When manufactured using the materials ad the pre-treatment ad casting conditions described hereinafter, the reinforced lightweight aluminum-base disc brake caliper of the invention is as much as 60% lighter than cast iron calipers, yet exhibits stiffness and strength comparable thereto.

In one aspect, the present invention provides a process for producing a cast selectively reinforced disc brake caliper having a bridge section and an outer leg section, comprising the steps of:
a. fabricating a ferrous alloy insert having a shape similar to and volume raging from about 20 to 80% of that of said bridge ad outer-leg sections;
b. heating said insert to a temperature of at least 50°C;
c. placing said insert into the bridge and outer-leg sections of a caliper mold; and
d. casting an Al-base alloy into the mold and overcasting said insert into said bridge and outer-leg sections of the caliper to form a strong metallurgical bond therebetween.

Preferably, the insert may be fabricated by a stamping or forging operation or it can be a cast part or machined from an profile extrusion. The insert is selected from a ferrous alloy, preferably a steel or cast iron alloy which exhibits a minimum Young's modulus of approximately 150 GPa and a minimum tensile strength of about 500 MPa. The insert geometry must be designed to fit within the dimensions of the caliper's bridge section and outer-leg. Overall, the insert will comprise a volume fraction in this location of the caliper, ranging from about 20 - 80%, and preferably from about 40 to 60 % of that of said bridge and outer-leg sections.

To prevent premature "freeze-off" of the molten Al alloy as it is cast as well as provide a metallurgical bond between the ferrous alloy insert and the aluminum overcast layer, the insert should be preheated prior to placing it into the mold. The insert should be at least 50°C and not higher than approximately 500°C. Pre-heating of the insert may be performed as a separate step in the process or may be accomplished by placing the insert into a hot mold and allowing it to heat in-situ. The conditions of temperature used in the present invention have been selected to allow for reaction of the molten aluminum with the ferrous alloy insert to form a metallurgical bond between the two alloys. The temperature to which the insert is heated prior to placing it in the mold will vary depending on the insert alloy being used as well as the relative proportion of the insert in the mold. This latter condition applies since a smaller insert will be rapidly heated by the molten aluminum alloy prior to solidification. The bond which occurs between the ferrous alloy insert includes the reduction of oxides on the surface of the insert as well as the formation of intermetallic compounds, such as Fe₃Al, FeAl and FeAl₃, at the ferrous alloy / aluminum interface.

Based on the insert and mold geometry and dimensions, the insert should be "pinned" into the mold to hold it in place and prevent it from shifting during subsequent casting of molten Al into the mold. The mold can be a conventional high temperature tool steel or cast iron mold used, for example, in permanent mold casting, die casting or squeeze casting. The insert can also be placed inside a sand mold or a mold used in investment casting.

Aluminum may be cast following conventional casting parameters and techniques depending on the process selected. Al-base alloys used as an overcast layer in the present invention can be any conventional castable alloy. Preferred alloys include those comprising the families of Al-Si -base alloys, e.g., A354, A355, A356, A357 or A380 and Al-Mg -base alloys, e.g., B535. In general, the molten Al alloy should be heated to a temperature ranging from about 675°C to about 750°C. Slightly higher melt temperatures may be used; however, it is advisable under such conditions to place a protective gas shroud over the melt to prevent hydrogen absorption.

The ability to selectively reinforce an Al-base alloy disc brake caliper with a ferrous alloy insert allows for comparable braking performance to be achieved as wall as a significant weight reduction in comparison to a conventional nodular cast iron without the need to significantly modify the caliper dimensions and "package" size. Accordingly, in another aspect, the invention provides a process for producing a cast selectively reinforced brake caliper having a bridge section and an outer leg section, comprising the steps of:
a. fabricating a ceramic reinforced, Al-base alloy metal matrix composite insert, hereinafter referred to as an Al-base MMC insert, having a shape similar to and a volume ranging from about 20 to 80% of that of said bridge and outer-leg sections;
b. heating said insert to a temperature of at least 50°C,
c. placing said insert into the bridge and outer-leg sections of a caliper mold; and,
d. casting an Al-base alloy into the mold and overcasting said insert into the bridge and outer-leg section of the caliper to form a strong metallurgical bond therebetween.

In general, the calipers produced by the process of the present invention exhibit excellent mechanical and physical properties, including high stiffness and strength. Together with the reduced density afforded by the aluminum component, such properties make the caliper especially suited for replacing conventional cast iron calipers (which are much heavier) without any significant change in dimensions or "package" size.

Ceramic reinforced, Al-base MMCs preferred for use as an insert in the process of our invention are those which exhibit a Young's modulus of approximately 150 GPa. Such composites are those produced by Lanxide Corporation using a pressureless infiltration process; or highly loaded Al-base MMCs fabricated by pressure infiltration techniques similar to those described in USP 3,547,180.

Aluminum may be cast following conventional casting parameters and techniques depending on the process selected. Al-base alloys used as an overcast layer in the present invention can be any conventional castable alloy. Preferred alloys include those comprising the families of Al-Si -base alloys, e.g., A354, A355, A356, A357 or A380 and Al-Mg -base alloys, e.g., B535. In general, the molten Al alloy should be heated to a temperature raging from about 675°C to about 750°C. Slightly higher melt temperatures may be used; however, it is advisable under such conditions to place a protective gas shroud over the melt to prevent hydrogen absorption.

### Brief Description of the Drawings

The invention will be more fully understood and further advantages will become apparent when reference is made to the following detailed description of the preferred embodiments of the invention and the accompanying drawings, in which:
Fig. 1 is a schematic of the graphite mold used to fabricate shear-lap panels comprised of a ferrous alloy or Al-base all MMC insert and an Al-base alloy overcast layer.
Fig. 2 is a light photomicrograph of a ferrous alloy / aluminum alloy interface indicating the presence of iron aluminide intermetallic compound particles formed by the process described in the present invention:
Fig. 3 is a light photomicrograph of a ceramic reinforced Al-base alloy composite / aluminum alloy interface indicating a partial melting of the composite material and slight migration of the ceramic particulate reinforcement; and,
Fig. 4 is a schematic representation of a selectively reinforced brake caliper containing a steel or ceramic reinforced Al-base alloy composite insert present in the bridge and outer-leg area of a caliper.

### Description of the Preferred Embodiments

The present invention provides a process for selectively reinforcing a lightweight Al-base alloy disc brake caliper comprising the steps of fabricating a ferrous alloy or ceramic reinforced, Al-base alloy metal matrix composite (MMC) inert having a shape similar to and volume ranging from about 20 to 80% of that of a caliper's bridge ad outer-leg sections; heating said insert to a temperature of at least 50°C before placing the insert into the bridge and outer-leg sections of a disc brake caliper mold and then overcasting said insert with an Al-base alloy to form a strong metallurgical bond between said bridge and outer-leg sections of the caliper. In this manner, the disc brake caliper is provided with a selective reinforcement which imparts enhanced stiffness and strength thereto. Preferably, a ferrous alloy insert may be fabricated by a stamping or forging operation or it can be a cast part or machined from an profile extrusion. The insert is selected from a ferrous alloy, preferably a steel or cast iron alloy, which exhibits a minimum Young's modulus of approximately 150 GPa and a minimum tensile strength of 500 MPa. Steel alloys suitable as an insert include for example AISI type 1040, 1045, 1050, 1060, 1070, 1080, 1086, 1090, 1095, 4130, 4140 as well as ASTM A36 cast steel. Cast iron alloys suitable for inserts include for example, nodular cast iron class D5506, D7003, 80-60-03, 80-55-06, 100-70-03, and 120-90-02. The geometry of the insert is specific to the caliper and reflects the dimensions of the calipers bridge and outer-leg section. The insert is smaller than the bridge and outer-leg sections, and preferably comprises a volume fraction relative to this location in the caliper, ranging from about 20 - 80%.

Ceramic reinforced, Al-base alloy metal matrix composites (MMC) preferred for use as an insert in the process of our invention are those which exhibit a Young's modulus of approximately 150 GPa. Such composites are those produced by Lanxide Corporation using a pressureless infiltration process; or highly loaded Al-base MMCs fabricated by pressure infiltration techniques similar to those described in USP 3,547,180. These composites are typically comprised of SiC or alumina particulate, whisker or fiber reinforced Al-base alloy composites, wherein the ceramic volume fractions are typically greater than 30%.

Preheating of the ferrous alloy or metal matrix composite insert prior to placing it in the mold for subsequent overcasting with molten Al is preferable to prevent premature "freeze-off" of the molten Al alloy when it contacts said insert as well as promote a metallurgical bond between the insert and the aluminum overcast layer. "Freeze-off' as referred to herein is defined as the phenomenon wherein molten aluminum prematurely solidifies when it contacts the insert and does not completely fill the mold during casting. A metallurgical bond as referred to herein, is defined as a phenomenon wherein molten aluminum reacts with the surface of the insert. The temperature to which the insert is heated prior to placing it in the mold will vary depending on the insert alloy being used as well as the relative proportion of the insert in the mold. This latter condition applies since a smaller insert will be rapidly heated by the molten aluminum alloy prior to solidification. For the case of a ferrous alloy insert, this reaction includes the reduction of oxides on the surface of the insert as well as the formation of intermetallic compounds, such Fe₃Al, FeAl ad FeAl₃, at the ferrous alloy / aluminum interface. For the case of the ceramic reinforced Al-base alloy composite insert, this reaction involves partial melting of the composite material and slight migration of the ceramic particulate reinforcement. To affect reaction, said inserts should be at least 50°C ad not higher than approximately 500°C. Preferably, said inserts should be preheated to a temperature ranging from about 300-450°C. Preheating may be performed as a separate step in the process or may be accomplished by placing the insert into a hot mold of comparable temperature and allowing it to heat in-situ. A hot mold may be similar to the types used in permanent mold casting, die casting and squeeze casting of aluminum alloys.

To hold the insert in place in the mold and prevent it from shifting during the cast, the insert should be "pinned" into the mold. Pinning can be accomplished by placing spacers in the mold which positions and firmly holds the insert in place. Spacers can be ancillary parts or can be designed as an integral of the insert.

Casting of aluminum may be accomplished following conventional casting parameters and techniques depending on the specific casting process selected. Al-base alloys suitable for use as an overcast layer in the present invention can be selected from any conventional castable alloy. Preferred alloys include those comprising the families of Al-Si -base alloys, e.g., A354, A355; A356, A357 or A380 and Al-Mg -base alloys, e.g., B535.

In general, the molten Al alloy should be heated to a temperature ranging from about 675°C to about 750°C. Slightly higher melt temperatures may be used; however, it is advisable under such conditions to place a protective gas shroud over the melt to prevent hydrogen absorption. Casting may be performed using a conventional high temperature tool steel or cast iron mold ; for example, used in permanent mold, die or squeeze casting. The insert can also be placed inside a sand mold or a mold used in investment casting.

In conversion from °F to °C, the temples were rounded off as were the conversions from ksi to MPa and inches to centimeters. Also, alloy compositions disclosed herein are nominal. With respect to conditions, for commercial production it is not practical or realistic to impose or require conditions extant in a research laboratory facility. Temperatures may vary, for example, by 25°C of the target temperature disclosed herein. Thus, having a wider window for processing conditions adds to the practical value of the process.

This invention is further described herein, but is not limited by the examples given below. In all examples the test samples were comprised of Aluminum alloy 356 overcast steel, cast iron and ceramic reinforced aluminum base alloy composites by the fabrication techniques described above. The specific techniques, conditions, materials, proportions and reported date set forth to illustrate the principles of the invention are exemplary and should not be construed as limiting the scope of the invention.

### Example I

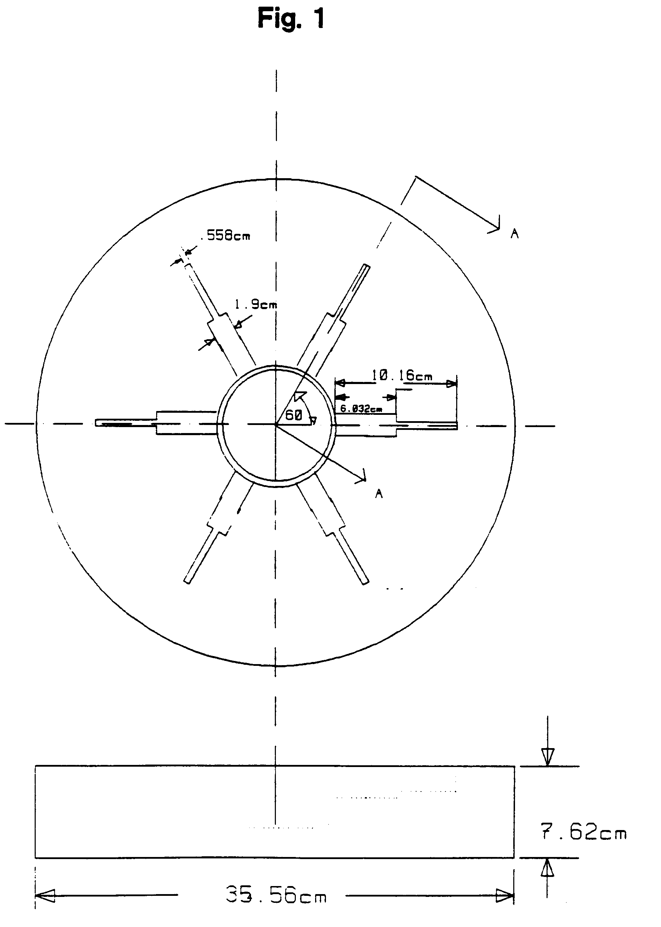

Test bars of nodular cast iron 5506 and ceramic reinforced Al-base composite are machined to have a rectangular dimension of approximately 0.5 cm x 2.5 cm x 5.0 cm. The test bars are then de-greased and cleaned by mechanical abrasion prior to placing the insert into a graphite mold, Fig. 1. The inserts are placed in slots machined in the mold having a dimension of approximately 0.6 cm x 2.5 cm x 2.5 cm. In the center of the mold is a reservoir region in which molten aluminum alloy A356 (nominally Al_{bal} - 7 wt. % Si - 0.3 wt.% Mg) will be subsequently poured. The mold containing the inserts is then placed into a furnace for heating.

In a series of experiments to evaluate the mechanical integrity of the bond between the insert and the overcast Al layer, the mold temperature is varied between 285 - 425°C prior to casting. Likewise, casting temperatures of the molten Al A356 alloy are varied from approximately 675-755°C. Shear-lap test panels, comprised of a cast iron or Al-base metal matrix composite inserts with an overcast Al A356 alloy layer, are formed by casting molten metal into a preheated mold; filling the mold to completely envelop (i.e., overcast) the insert with molten metal; and, allowing the molten metal to solidify. Shear-lap test samples are then machined from the casting.

The results of shear-lap testing performed to mechanically evaluate the integrity of the bond between the insert and the overcast Al A356 layer are summarized in Table 1. The data indicates that preheating the cast iron insert in the present insert and mold geometry is necessary to form a metallurgical bond between the insert and the overcast.

**Table 1**

| Insert Type* | Melt Temperature (°C) | Mold Temperature (°C) | Shear Strength (MPa) | Tensile Stress (MPa) |
|---|---|---|---|---|
| NCI 5506 | 675 | 25 | 1.5 | 24 |
| " | 675 | 325 | 15.2 | 240 |
| " | 755 | 287 | 16.0 | 278 |
| Al-MMC | 675 | 325 | 9.0 | 143 |
| " | 755 | 287 | 16.5 | 271 |
| " | 753 | 426 | 7.2 | 144 |

Al layer. The data also indicates that a similar interface mechanical integrity (as measured by the shear strength of the overlap cross-section and the tensile stress applied to the insert) is afforded for a lower temperature cast iron insert by increasing the melt temperature of the Al A356 alloy.

### Example II

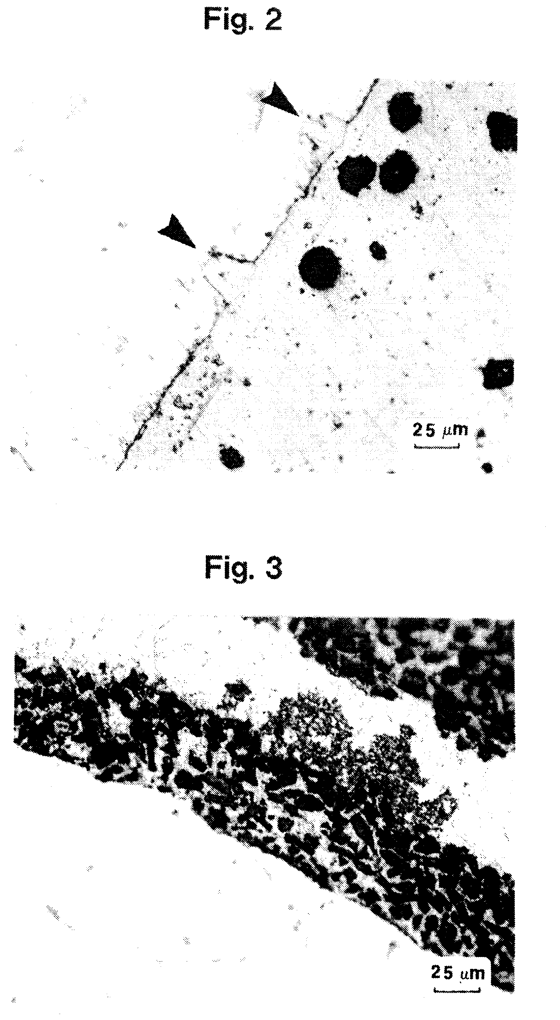

Shear-lap test specimens fabricated in the process described in Example 1 are sectioned and prepared for microscopy to examine the interface between the cast iron and the aluminum alloy A356 layer as well as between the Al-base metal matrix composite (MMC) insert and the aluminum alloy A356 layer. Light photomicrographs of the cast iron / Al alloy A356 interface, Fig. 2, indicate that reaction has occurred and that Fe-Al intermetallic particles have been formed. Light photomicrographs of the Al base alloy metal matrix composite / Al alloy A356 interface, Fig. 3, indicate that partial melting of the Al-base MMC insert and slight migration of the ceramic reinforcing particles has

### Example III

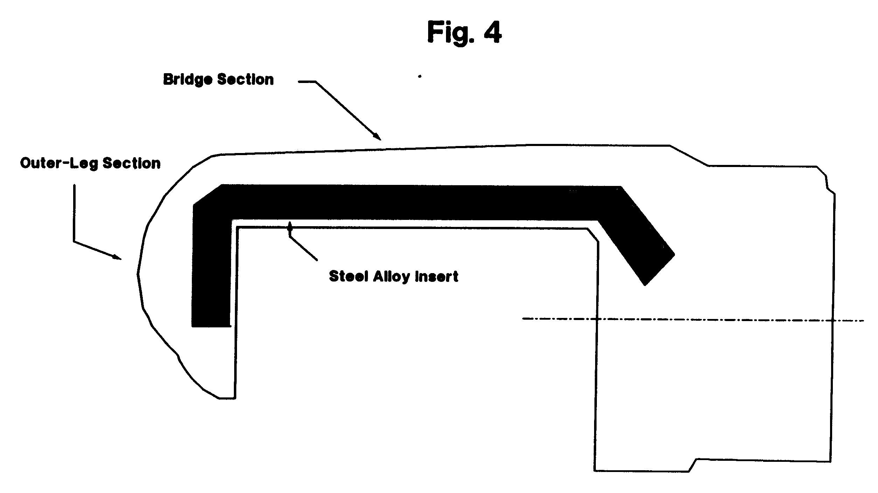

To produce a Al-base alloy disc brake caliper having selectively reinforced bridge and outer-leg sections, Fig. 4, a ANSI type 4130 steel insert having a shape similar to and a volume comprising about 50% of the bridge and outer-leg section of the caliper is initially formed by machining a channel extrusion. The steel insert is then heated to approximately 425°C and placed into the bridge and outer-leg sections of a preheated permanent mold. Once in place, the mold is clamped together and molten aluminum alloy A356, having a melt temperature of about 750°C, is poured into the mold until it is completely filled. Once solidified, a selectively reinforced Al-base disc brake caliper which exhibits comparable stiffness, strength and about a 45 % weight savings over a comparable cast iron caliper is formed.

Having thus described the invention in rather full detail, it will be understood that such detail need not be strictly adhered to but that various changes and modifications may suggest themselves to one skilled in the art, all falling within the scope of the subjoined claims.

## Claims

1. A process for producing a cast, selectively reinforced disc brake caliper having a bridge section and an outer-leg section, comprising the steps of:
a. fabricating a ferrous base alloy insert having a shape similar to and volume ranging from about 20 to 80 % of that of said bridge and outer-leg sections;
b. heating said insert to a temperature of at least 50°C;
c. placing said insert into the bridge and outer-leg sections of a caliper mold; and
d. casting an Al-base alloy into the mold and overcasting said insert into said bridge and outer-leg sections of the caliper to form a strong metallurgical bond between said alloy and said insert.

2. A process as recited by claim 1, wherein said ferrous alloy insert is a steel or cast iron alloy having a minimum Young's modulus of about 150 GPa and a minimum tensile strength of about 500 MPa.

3. A process as recited by claim 1, wherein said ferrous alloy insert is fabricated by a process selected from the group consisting of stamping, forging, casting and machining from a profile extrusion.

4. A process as recited by claim 1, wherein said ferrous alloy insert has a volume ranging from about 40 to 60 % of that of said bridge and outer-leg sections.

5. A process as recited by claim 1, wherein said insert is heated to a temperature ranging from about 50 to 500°C.

6. A process as recited by claim 1, wherein said insert is heated to a temperature ranging from about 250 to 450°C.

7. A process as recited by claim 1, wherein said insert is heated to a temperature sufficient to initiate reaction between said Al-base alloy and said insert during casting to form said metallurgical bond.

8. A process as recited by claim 7, wherein said reaction reduces oxides on the surface of the insert and forms intermetallic compounds at the ferrous alloy/aluminum interface.

9. A process for producing a cast, selectively reinforced disc brake caliper having a bridge section and an outer leg section, comprising the steps of:
a. fabricating a ceramic reinforced, Al-base alloy metal matrix composite insert having a shape similar to and volume ranging from about 20 to 80 % of that of said bridge and outer-leg sections;
b. heating said insert to a temperature of at least 50°C;
c. placing said composite insert into the bridge and outer-leg sections of a caliper mold; and
d. casting an Al-base alloy into the mold and overcasting said insert into the bridge and outer-leg sections of the caliper to form a strong bond therebetween.

10. A cast, selectively reinforced brake caliper having a bridge section and an outer-leg section, each of said bridge and outer-leg sections comprising an insert having a shape similar thereto and a volume ranging from about 20 to 80 % thereof, said caliper having been produced by heating said insert to a temperature of at least 50°C, and placing said insert into the bridge and outer-leg sections of a caliper mold, and casting an Al-base alloy into the mold so as to overcast said insert and thereby form a strong metallurgical bond between the bridge and outer-leg sections thereof.

## Patentansprüche

1. Verfahren zur Herstellung eines gegossenen, teilweise verstärkten Scheibenbremssattels mit einem Brückenabschnitt und einem Außenarmabschnitt, umfassend die folgenden Schritte:
a. Herstellung eines Einsatzes aus einer Legierung auf Eisenbasis mit ähnlicher Gestalt und einem Volumen im Bereich von etwa 20 bis 80% der besagten Brücken- und Außenarmabschnitte,
b. Erhitzen dieses Einsatzes auf eine Temperatur von mindestens 50°C,
c. Einlegen dieses Einsatzes in die Brücken- und Außenarmabschnitte eines Sattelformwerkzeugs und
d. Gießen einer Legierung auf Aluminiumbasis in das Formwerkzeug und über jenen Einsatz in diese Brücken- und Außenarmabschnitte des Sattels unter Bildung eines starken metallurgischen Verbunds zwischen jener Legierung und jenem Einsatz.

2. Verfahren nach Anspruch 1, wobei jener Einsatz aus Eisenlegierung eine Stahl- oder Gußeisenlegierung mit einem Mindestelastizitätsmodul von etwa 150 GPa und einer Mindestzugfestigkeit von etwa 500 MPa ist.

3. Verfahren nach Anspruch 1, wobei jener Einsatz aus Eisenlegierung nach einem aus der Stanzen, Schmieden, Gießen und spanabhebende Bearbeitung umfassenden Gruppe ausgewählten Verfahren aus einem Strangpreßprofil hergestellt wird.

4. Verfahren nach Anspruch 1, wobei jener Einsatz aus Eisenlegierung ein Volumen im Bereich von etwa 40 bis 60% der besagten Brücken- und Außenarmabschnitte aufweist.

5. Verfahren nach Anspruch 1, wobei jener Einsatz auf eine Temperatur im Bereich von etwa 50 bis 500°C erhitzt wird.

6. Verfahren nach Anspruch 1, wobei jener Einsatz auf eine Temperatur im Bereich von etwa 250 bis 450°C erhitzt wird.

7. Verfahren nach Anspruch 1, wobei jener Einsatz auf eine genügende Temperatur erhitzt wird, um während des Gießens eine Reaktion zwischen jener Legierung auf Aluminiumbasis und jenem Einsatz zur Bildung des besagten metallurgischen Verbunds einzuleiten.

8. Verfahren nach Anspruch 7, wobei diese Reaktion Oxide auf der Oberfläche des Einsatzes reduziert und an der Grenzfläche zwischen Eisenlegierung und Aluminium intermetallische Verbindungen bildet.

9. Verfahren zur Herstellung eines gegossenen, teilweise verstärkten Scheibenbremssattels mit einem Brückenabschnitt und einem Außenarmabschnitt, umfassend die folgenden Schritte:
a. Herstellung eines Einsatzes aus keramisch verstärktem Metallmatrixverbundstoff aus einer Legierung auf Aluminiumbasis mit ähnlicher Gestalt und einem Volumen im Bereich von etwa 20 bis 80% der besagten Brücken- und Außenarmabschnitte,
b. Erhitzen dieses Einsatzes auf eine Temperatur von mindestens 50°C,
c. Einlegen dieses Verbundstoffeinsatzes in die Brücken- und Außenarmabschnitte eines Sattelformwerkzeugs und
d. Gießen einer Legierung auf Aluminiumbasis in das Formwerkzeug und über jenen Einsatz in die Brücken- und Außenarmabschnitte des Sattels unter Bildung eines starken Verbunds dazwischen.

10. Gegossener, teilweise verstärkter Bremssattel mit einem Brückenabschnitt und einem Außenarmabschnitt, wobei diese Brücken- und Außenarmabschnitte jeweils einen Einsatz mit ähnlicher Gestalt und einem Volumen im Bereich von etwa 20 bis 80% davon enthalten, wobei dieser Sattel durch Erhitzen jenes Einsatzes auf eine Temperatur von mindestens 50°C, Einlegen jenes Einsatzes in die Brücken- und Außenarmabschnitte eines Sattelformwerkzeugs und Gießen einer Legierung auf Aluminiumbasis in das Formwerkzeug zum Gießen über jenen Einsatz, um dadurch einen starken metallurgischen Verbund zwischen dessen Brücken- und Außenarmabschnitten zu bilden, hergestellt wurde.

## Revendications

1. Procédé de production d'un étrier de frein à disque coulé, sélectivement renforcé, comportant une section de pontage et une section de branche extérieure, comprenant les étapes de:
a) fabrication d'un insert en alliage à base ferreuse ayant une forme similaire à, et un volume dans l'intervalle d'environ 20 à 80% de celui desdites sections de pontage et de branche extérieure,
b) chauffage dudit insert à une température d'au moins 50°C,
c) placement dudit insert dans les sections de pontage et de branche extérieure d'un moule à étrier, et
d) coulée d'un alliage à base d'Al dans le moule, et noyage dudit insert dans lesdites sections de pontage et de branche extérieure de l'étrier, pour former une forte liaison métallurgique entre ledit alliage et ledit insert.

2. Procédé suivant la revendication 1, dans lequel ledit insert en alliage ferreux est un alliage d'acier ou de fonte ayant un module de Young minimal d'environ 150 GPa et une résistance à la traction minimale d'environ 500 MPa.

3. Procédé suivant la revendication 1, dans lequel ledit insert en alliage ferreux est fabriqué dans un processus sélectionné dans le groupe comprenant l'estampage, le forgeage, la coulée et l'usinage d'un profil extrudé.

4. Procédé suivant la revendication 1, dans lequel ledit insert en alliage ferreux a un volume dans l'intervalle d'environ 40 à 60% de celui desdites sections de pontage et de branche extérieure.

5. Procédé suivant la revendication 1, dans lequel ledit insert est chauffé à une température dans l'intervalle d'environ 50 à 500°C.

6. Procédé suivant la revendication 1, dans lequel ledit insert est chauffé à une température dans l'intervalle d'environ 250 à 450°C.

7. Procédé suivant la revendication 1, dans lequel ledit insert est chauffé à une température suffisante pour initier une réaction entre ledit alliage à base d'Al et ledit insert, durant la coulée, pour former ladite liaison métallurgique.

8. Procédé suivant la revendication 7, dans lequel ladite réaction réduit les oxydes à la surface dudit insert et forme des composés intermétalliques à l'interface alliage ferreux/aluminium.

9. Procédé de production d'un étrier de frein à disque coulé, sélectivement renforcé, comportant une section de pontage et une section de branche extérieure, comprenant les étapes de:
a) fabrication d'un insert composite, fait d'une matrice métallique en alliage à base d'Al renforcée par de la céramique, ayant une forme similaire à, et un volume dans l'intervalle d'environ 20 à 80% de celui desdites sections de pontage et de branche extérieure,
b) chauffage dudit insert à une température d'au moins 50°C,
c) placement dudit insert dans les sections de pontage et de branche extérieure d'un moule à étrier, et
d) coulée d'un alliage à base d'Al dans le moule, et noyage dudit insert dans lesdites sections de pontage et de branche extérieure de l'étrier, pour former une forte liaison entre celles-ci.

10. Etrier de frein coulé, sélectivement renforcé, comportant une section de pontage et une section de branche extérieure, chacune desdites sections de pontage et de branche extérieure comprenant un insert ayant une forme similaire à celles-ci et un volume dans l'intervalle d'environ 20 à 80% de celui de celles-ci, ledit étrier ayant été produit en chauffant ledit insert à une température d'au moins 50°C, et en plaçant ledit insert dans les sections de pontage et de branche extérieure d'un moule à étrier, et en coulant un alliage à base d'Al dans le moule de façon à noyer ledit insert et ainsi à former une forte liaison métallurgique entre les sections de pontage et de branche extérieure de celui-ci.
